# EUROPEAN PATENT SPECIFICATION

(11) **EP 3 254 909 B1**
(45) Date of publication and mention of the grant of the patent: **11.09.2019**
(21) Application number: 16173048.6
(22) Date of filing: 06.06.2016
(51) Int. Cl.: B60R 22/46

(54) **A BELT RETRACTOR FOR A VEHICLE SAFETY BELT SYSTEM**
GURTAUFROLLER FÜR EIN FAHRZEUGSICHERHEITSGURTSYSTEM
ENROULEUR DE CEINTURE POUR UN SYSTÈME DE CEINTURE DE SÉCURITÉ DE VÉHICULE

(43) Date of publication of application: 13.12.2017
(73) Proprietor: TRW Automotive GmbH, 73553 Alfdorf (DE); TRW Polska Sp.z.o.o., 42-200 Czestochowa (PL)
(72) Inventor: Büchsner, Michael, 5020 Salzburg (AT); Krukowski, Krzysztof, 42-200 Czestochowa (PL); Kiwacz, Michal, 42-231 Cykarzew (PL)
(74) Representative: ZF TRW Patentabteilung

(56) References cited:
- WO-A1-2015/037485
- DE-A1-102006 021 381
- DE-A1-102007 008 495
- DE-A1-102010 051 463
- DE-A1-102014 006 499
- US-A1- 2015 336 539

## Description

The invention relates to a belt retractor for a vehicle safety belt system. In particular, the invention relates to a belt retractor comprising a belt tensioner for tensioning a safety belt during a belt tensioning phase, and a load limiter for limiting the load applied by the safety belt on a vehicle occupant after the belt tensioning phase during a load limiting phase.

A belt tensioner is intended to tension the safety belt in case of a crash so that the vehicle occupant takes part as quickly as possible in the overall deceleration of the vehicle. By tensioning the safety belt especially the negative effects of the so-called film spool effect (belt webbing loosely rolled on the belt reel) and belt slack (belt webbing that is not in close contact with the vehicle occupant), which impede the restraint of the vehicle occupant, are reduced.

A load limiter provides that the load of the safety belt acting on the vehicle occupant after tensioning of the safety belt does not excessively increase. In order to relieve the vehicle occupant, after locking the belt reel the belt reel is nevertheless allowed to rotate in the unwinding direction (opposite to the winding direction), the rotation being decelerated, however, by energy conversion, i.e. by performing work (e.g. twisting a torsion rod).

A particular type of a belt retractor, which became known from published German patent application DE 10 2006 031 359 A1, uses a deformable load transmission element instead of a linearly moving toothed rack for tensioning the safety belt. The deformable load transmission element is accommodated in a space-saving curved tube and can be moved by activation of a drive unit towards a toothed pinion coupled to the belt reel. The deformable load transmission element rotates the pinion so that the belt reel is rotated in a winding direction. The deformable load transmission element engages the teeth of the pinion relatively softly and smoothly, thus avoiding the rough tooth on tooth contact of common rack-and-pinion tensioners. Variants of this type of belt retractor are shown, inter alia, in DE 10 2007 008 495 A1, DE 10 2010 051 418 A1, DE 10 2010 051 419 A1, DE 10 2010 051 420 A1, DE 10 2010 051 422 A1 and DE 10 2010 051 463 A1.

It is an object of the invention to prevent any interference of the pinion and the load transmission element when the belt reel is rotating in an unwinding direction during the load limiting phase following the belt tensioning phase.

This problem is solved by a belt retractor according to claim 1. Advantageous and expedient embodiments of the belt retractor according to the invention are recited in the corresponding dependent claims.

The invention makes use of the finding that the load transmission element forces the pinion - and the belt reel coupled thereto - to rotate as long as the teeth of the pinion engage the load transmission element in a force transmitting manner. This is the case when the pinion teeth cut into the moving load transmission element. Insofar the belt tensioning phase is similar to known techniques.

However, in the load limiting phase, which follows after the belt tensioning phase, the belt reel needs to be turned in the opposite direction (unwinding direction) in a controlled manner. Therefore any excess movement of the load transmission element must not be transferred via the pinion to the belt reel. Moreover, as long as the teeth of the pinion are still stuck in the load transmission element, the desired rotation of the belt reel in the unwinding direction may be impeded or even blocked when the pinion is coupled to the belt reel. Therefore, the decoupling mechanism of the belt retractor according to the invention ensures that at the end of the belt tensioning phase the belt reel is no longer coupled to the pinion. As a result, rotation of the belt reel in the unwinding direction is neither affected by the load transmission element nor by the pinion in the further process of the load limiting phase.

According to a common principle of the preferred embodiments of the invention, the pinion is arranged coaxially with the belt reel, and the decoupling mechanism includes means for urging the pinion away from the belt reel in axial direction. In other words: Initially the pinion rests against an axial side of the belt reel for joint rotation. After the belt reel has performed sufficient rotation for tensioning the safety belt, the decoupling mechanism detaches the pinion from the belt reel in axial direction so that no torque of the pinion is transferred to the belt reel anymore.

In a first preferred embodiment of the invention a pathway for the load transmission element is defined, and a guiding means is provided in the pathway for guiding the load transmission element in a direction in which the load transmission element exerts a force on the pinion in axial direction. This means that the load transmission itself is used to push away the pinion from the belt reel. The pathway and the guide means can be designed such that after the load transmission element has traveled a certain distance along the pathway - corresponding to a sufficient rotation of the belt reel for tensioning the safety belt - the load transmission element is directed away from the belt reel so that the load transmission element, which is still in engagement with the pinion, drags the pinion along, at least until the pinion is decoupled from the belt reel.

Preferably the guiding means is or includes a ramp. A ramp efficiently and reliably changes the direction of the moving load transmission element and only requires a minimum of construction space, especially if it is formed directly on the frame.

Using the load transmission element as a pusher for displacing the pinion is most efficient when the pinion has a suitably positioned target surface to which the load transmission can be directed and act upon. To this end, the pinion may be provided with a radial flange on an axial side facing away from the belt reel. The flange should radially extend beyond the teeth of the pinion in order to provide a sufficiently large target surface for the load transmission element.

According to a second preferred embodiment of the invention, the decoupling mechanism includes a gear construction for providing an axial force on the pinion. Since the movement of the load transmission element is transferred into a rotation of the pinion during the belt tensioning phase, it is expedient to use this technique also for another rotatable member that effects shifting the pinion into a position where it is decoupled from the belt reel. The basic idea behind the gear construction is that from the total angle of rotation of the pinion it can be exactly determined when the belt tensioning phase should be given up for starting the force-limiting operation.

The above-described concept can be implemented by a gear construction including an additional gearwheel that performs a movement relative to the pinion during the belt tensioning phase. The relative movement of the gearwheel results in a force on the pinion at the end of the belt tensioning phase in order to decouple the pinion from the belt reel. This means that during the belt tensioning phase the gearwheel moves relative to the pinion, and after a defined overall rotation of the pinion the relative movement is used for lifting the pinion from the belt reel.

According to a preferred design of the gear construction, the gearwheel is generally disc-shaped, and the pinion or the gearwheel includes at least one protrusion that engages a recess in the gearwheel or in the pinion, respectively, in the (initial) coupled state of the belt reel and the pinion.

By using such a design the dimensions of the protrusion and the recess can be selected such that the protrusion can travel a certain distance during the relative movement of the gearwheel before it reaches an edge of the recess. This travel distance should correlate with the amount of rotation of the pinion and the belt reel for sufficiently tensioning the safety belt.

One preferred way of effectively changing the direction of the relative movement between the pinion and the gearwheel to a direction allowing an axial detachment of the pinion from the belt reel requires a ramp structure. To this end, the protrusion and/or the edge of the recess are inclined, so that a relative movement within a plane perpendicular to the axis of rotation of the pinion and the belt reel is converted into a movement including an axially directed component.

The necessary power for driving the additional gearwheel is preferably taken from the moving load transmission element. Since the gearwheel needs to have an angular velocity different from that of the pinion, at least one intermediate gear is expedient, i.e. the gearwheel is indirectly driven by the load transmission element.

In particular, the gearwheel may be in engagement with a cogwheel that is partly arranged in a pathway of the load transmission element opposite the pinion, with the teeth of the gearwheel meshing with the teeth of the cogwheel. According to this construction the load transmission element not only forces the pinion but also the cogwheel to rotate. The speed of the relative movement between the gearwheel and the pinion, on which the termination of the belt tensioning phase depends, can be set as desired via the diameters of the pinion, the gearwheel and the cogwheel.

Further features and advantages of the invention will become apparent from the following description and from the accompanying drawings to which reference is made. In the schematic drawings:
- Figure 1 shows an exploded view of a belt retractor;
- Figure 2 shows a sectional view of the assembled belt retractor;
- Figure 3a shows a sectional view of a belt retractor concept according to the invention during a belt tensioning phase;
- Figure 3b shows another sectional view of the belt retractor concept during the belt tensioning phase;
- Figure 4a shows a sectional view of the belt retractor concept at the end of the belt tensioning phase;
- Figure 4b shows another sectional view of the belt retractor concept at the end of the belt tensioning phase;
- Figure 5a shows a sectional view of the belt retractor concept during a force-limiting operation;
- Figure 5b shows another sectional view of the belt retractor concept during the force-limiting operation;
- Figure 6a shows a top view of a belt retractor according to a first embodiment of the invention during a belt tensioning phase;
- Figure 6b shows a sectional view of a portion of the belt retractor during the belt tensioning phase;
- Figure 7a shows a top view of the belt retractor at the end of the belt tensioning phase;
- Figure 7b shows a side view of the belt retractor at the end of the belt tensioning phase;
- Figure 8a shows a side view of the belt retractor during a force-limiting operation;
- Figure 8b shows a sectional view of a portion of the belt retractor during the force-limiting operation;
- Figure 9 shows an exploded view of a belt retractor according to a second embodiment of the invention;
- Figure 10 shows a perspective view of the belt retractor of Figure 9;
- Figure 11 shows a top view of the belt retractor of Figure 9;
- Figure 12a shows a top view of a portion of the belt retractor according to the second embodiment of the invention during a belt tensioning phase;
- Figure 12b shows a sectional view along line A-A of Figure 12a;
- Figure 13a shows a top view of a portion of the belt retractor at the end of the belt tensioning phase;
- Figure 13b shows a sectional view along line A-A of Figure 13a;
- Figure 14a shows a top view of a portion of the belt retractor during a force-limiting operation; and
- Figure 14b shows a sectional view along line A-A of Figure 14a.

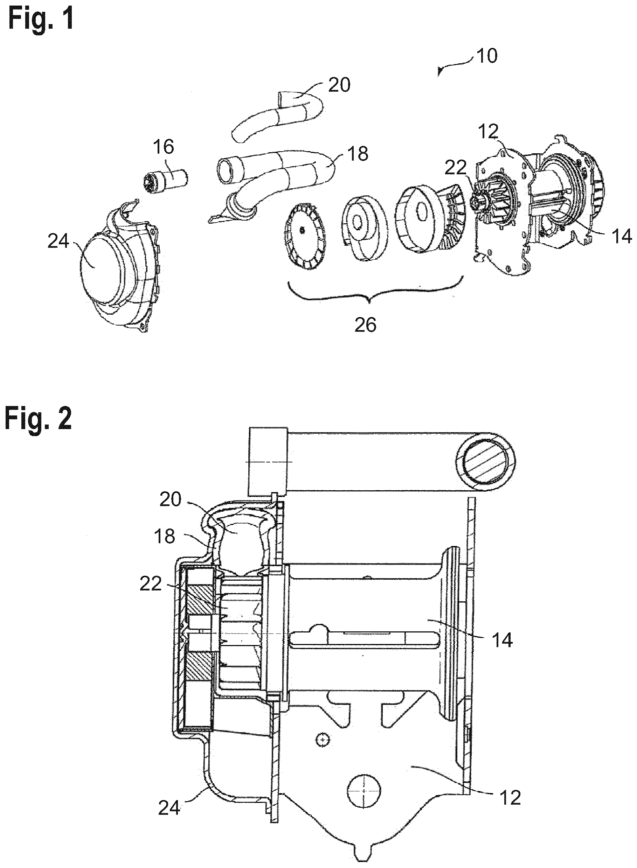

In Figure 1 the substantial component parts of an example embodiment of a belt retractor 10 comprising a pyrotechnically driven belt tensioner are shown. In Figure 2 the belt retractor is illustrated in the assembled state. The belt retractor 10 comprises a frame 12 supporting a rotatable belt reel 14 onto which a safety belt is wound. Furthermore, the belt retractor 10 includes a force-limiting mechanism (load limiter) not shown here in detail.

The belt tensioner of the belt retractor 10 includes a pyrotechnic drive unit 16, a tensioner tube 18 having a bent tubular portion, a load transmission element 20 disposed in the tensioner tube 18 as well as a toothed pinion 22. As can be seen in Figure 2 the belt reel 14 and the pinion are positioned such that they are coaxial with adjoining axial sides. The component parts of the belt tensioner are jointly arranged in a tensioner housing 24. In Figure 1 furthermore the retracting mechanism 26 of the belt retractor 10 is shown. This mechanism is not important to the function of the belt tensioner and the load limiter so that it is not explained in detail.

Initially the pinion 22 is coupled to the belt reel 14 so that they rotate jointly. The pinion 22 can be decoupled from the belt reel 14 by axially moving the pinion 22 away from the belt reel 14. In the decoupled state the pinion 22 and the belt reel 14 can rotate independently of each other.

The following description of a basic concept and two preferred embodiments of the invention is based on a belt retractor design as generally described above.

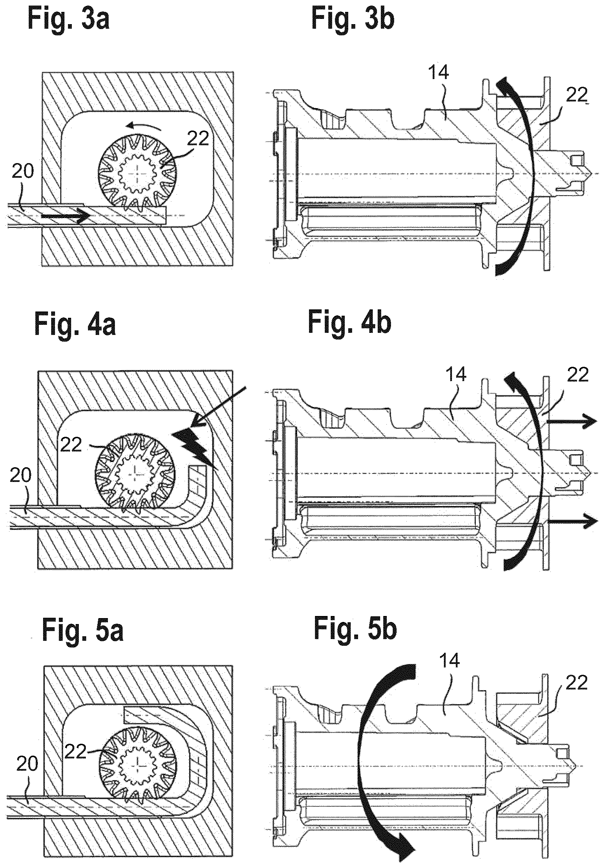

Figures 3a-5b show a basic concept of a decoupling mechanism that allows rotation of the belt reel 14 independent of both the load transmission element 20 and the pinion 22 during the load limiting phase subsequent to the belt tensioning phase.

When the pyrotechnic drive unit 16 is activated for tensioning of the safety belt the excessive pressure generated in the tensioner tube 18 urges the load transmission element 20 in a tensioning direction away from the drive unit 16 so that the load transmission element 20 engages in the pinion 22, as shown in Figure 3a. Upon further forward movement of the load transmission element 20 in the tensioning direction the pinion 22 is rotated forcibly in a winding direction. The belt reel 14 coupled to the pinion 22 is rotated with the latter (see Figure 3b) so that the safety belt is wound onto the belt reel 14 and thus belt tensioning is effectuated.

At the end of the belt tensioning phase the decoupling mechanism is activated, which is indicated symbolically by the arrow in Figure 4a. Specific embodiments of the decoupling mechanism and details about its activation will be described further below.

When the decoupling mechanism is activated the pinion 22 is urged away from the belt reel 14 in axial direction, as shown in Figure 4b. While the load transmission element 20 may further drive the pinion 22 in the winding direction (see Figure 5a) the pinion 22 becomes decoupled from the belt reel 14. This means that the belt reel 14 is no longer tied to the rotation of the pinion 22.

Thus, a force-limiting operation (load limiting phase) following the belt tensioning is possible without interference by the load transmission element 20 and the pinion 22. In particular, a limited rotation of the belt reel 14 opposite to the winding direction is allowed so as to prevent the load acting on the vehicle occupant from increasing excessively, as shown in Figure 5b.

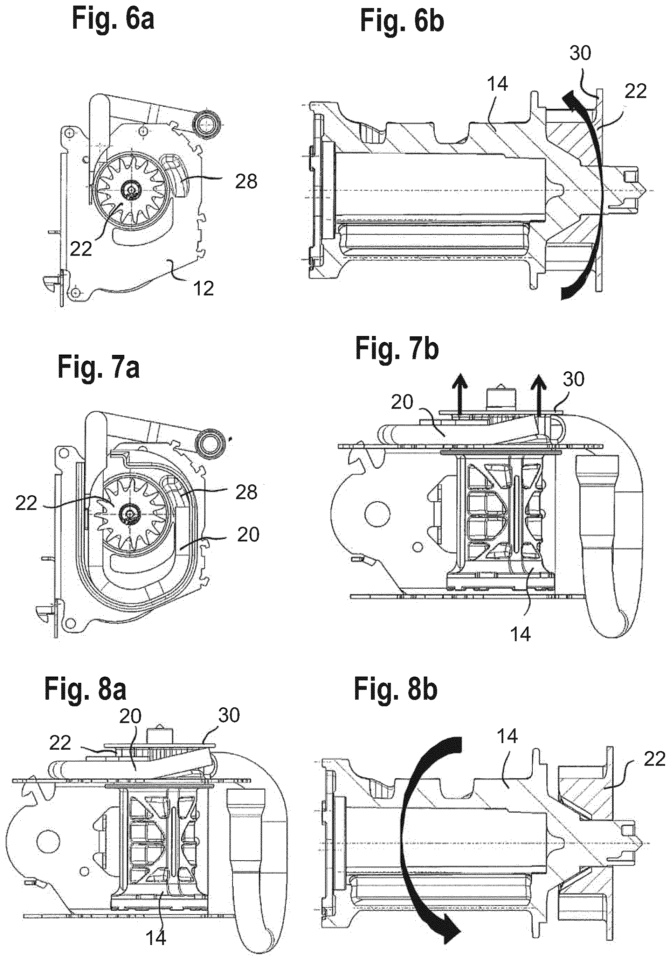

In Figures 6a-8b a first embodiment of the decoupling mechanism is shown. As can be seen in Figure 6a a ramp 28 is formed on the frame 12 of the belt retractor 10. The ramp 28 is located in the pathway of the load transmission element 20. Means for delimiting the pathway are not shown in Figure 6a. The ramp 28 ascends from a ground level of the pathway in an axial direction with respect to the pinion 22 and the belt reel 14. The ramp 28 may also be arranged or integrally formed on another component of the belt retractor 10 which the load transmission element 20 passes by.

On its axial side facing away from the belt reel 14 the pinion 22 has a radially extending flange 30, as can be seen in Figure 6b. The flange 30 radially protrudes over the teeth of the pinion 22. Together with the ramp 28 the flange 30 forms a decoupling mechanism as will be explained below.

When the load transmission element 20 engages the pinion 22 during the belt tensioning phase the pinion 22 is coupled to the belt reel 14 so that they rotate jointly in the winding direction (see Figure 6b). At the end of the belt tensioning phase the load transmission element 20 reaches the ramp 28, as can be seen in Figure 7a. The slope of the ramp 28 causes the load transmission element 20 to move away from the ground level of the pathway towards the flange 30 of the pinion 22. When the load transmission element 20 hits the flange 30 the whole pinion 22 is pushed in axial direction away from the belt reel 14, as shown in Figure 7b.

Thus, the pinion 22 is decoupled, and the belt reel 14 is allowed to rotate in the unwinding direction without interference by the load transmission element 20 or the pinion 22 so that a force-limiting operation is possible (see Figure 8b).

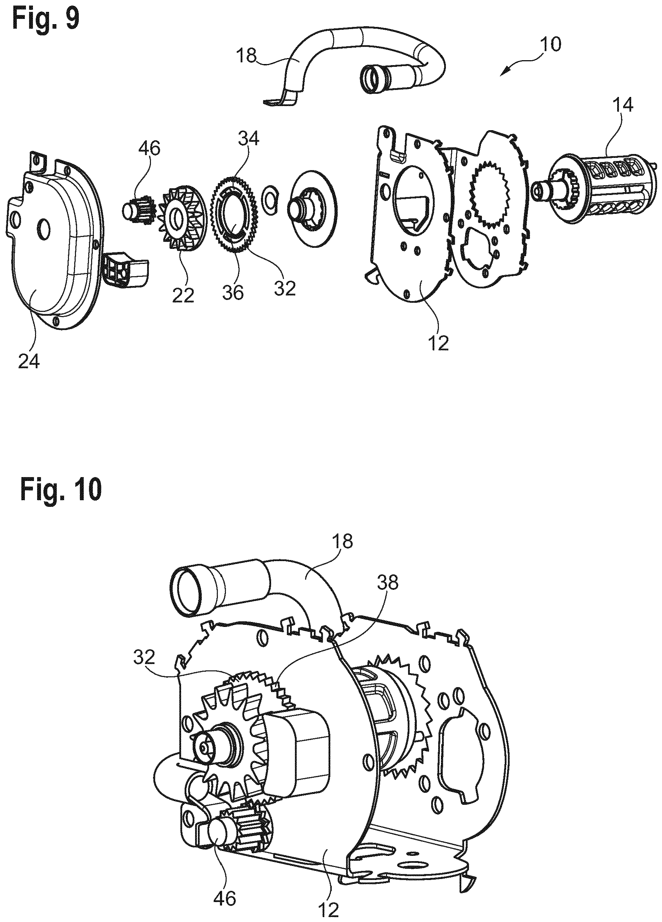

Figures 9-11 show a design of a belt retractor 10 with a second embodiment of the decoupling mechanism. Components which are similar to those of the belt retractor 10 shown in Figures 1 and 2 are given the same reference numerals. (The pyrotechnic drive unit 16 and the load transmission element 20 are not shown in Figures 9-11.)

According to the common basic concept described further above, the pinion 22 is initially coupled to the belt reel 14 so that they rotate jointly. The pinion 22 can be decoupled from the belt reel 14 by axially moving the pinion 22 away from the belt reel 14. In the decoupled state the pinion 22 and the belt reel 14 can rotate independently of each other.

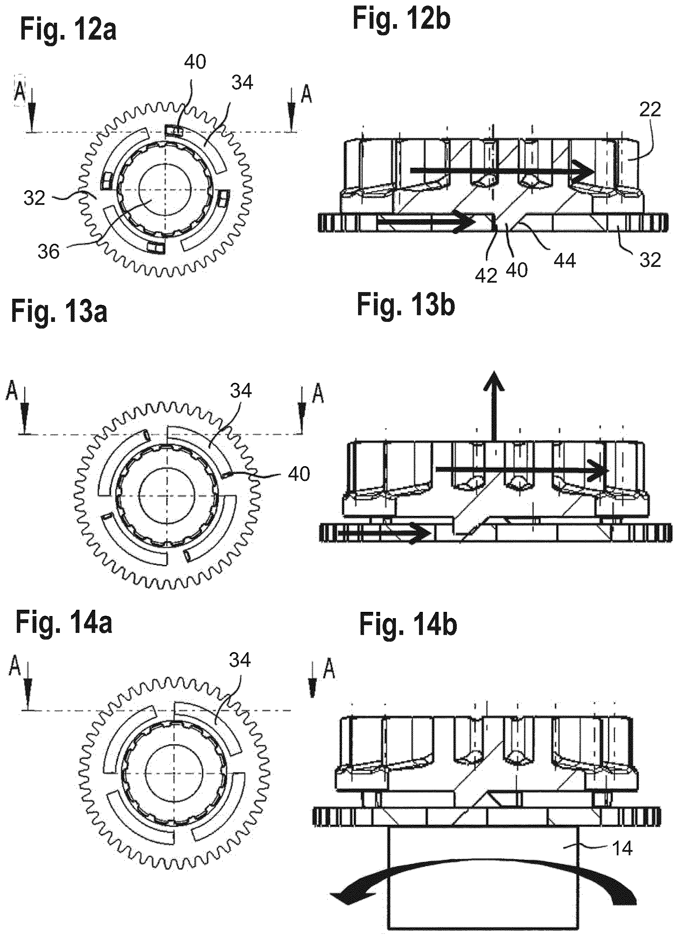

In contrast to the first embodiment, the second embodiment of the decoupling mechanism makes use of a special gear construction. Between the belt reel 14 and the pinion 22 a gearwheel 32 is positioned coaxially. The gearwheel 32 has a larger diameter than the pinion 22 and can rotate freely relative to the belt reel 14 and the pinion 22. As can be seen in Figure 9 the gearwheel 32 is shaped like a disc and has several recesses 34 which are located between a central opening 36 and outer teeth 38 (see also Figure 12a). The recesses 34 fully extend through the gearwheel 32 in axial direction. All recesses 34 are located at the same radial distance from the center of the gearwheel 32 and are spaced apart from each other in peripheral direction.

As shown in Figure 12b the pinion 22 has at least one wedge-shaped protrusion 40 extending in axial direction towards the belt reel 14. The protrusion 40 has a straight first peripheral end 42 and an inclined second peripheral end 44. The protrusion 40 extends into one of the recesses 34 of the gearwheel 32. Initially the protrusion 40 rests with its first end 42 on a first peripheral edge of the recess 34. Since the protrusion 40 is significantly smaller than the corresponding recess 34 in peripheral direction, there is a gap between the second end 44 of the protrusion 40 and a second peripheral edge of the recess 34 opposite to the first edge of the recess 34. The gap defines a traveling path for the protrusion 40 in peripheral direction. It is also possible to incline the first peripheral end 42.

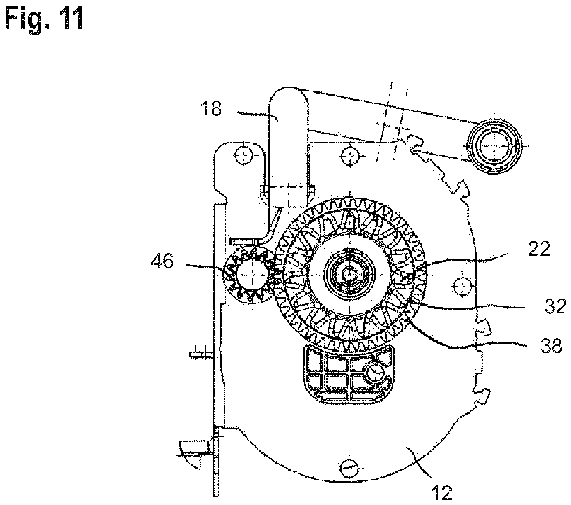

Referring back to Figures 10 and 11, a cogwheel 46 is rotatably supported in the frame 12 with its rotation axis being parallel to the common rotation axis of the belt reel 14, the pinion 22 and the gearwheel 32. The diameter of the cogwheel 46 is significantly smaller than the diameters of the gearwheel 32 and the pinion 22. The cogwheel 46 is positioned opposite the pinion 22 and partly within the traveling path of the load transmission element 20. While the outer teeth of the cogwheel 46 mesh with the teeth 38 of the larger gearwheel 32, there is a gap between the pinion 22 and the cogwheel 46, the gap being smaller than the diameter of the load transmission element 20.

The functionality of this gear construction will be explained with reference to Figures 12a-14b. The belt tensioning phase starts when the load transmission element 20 hits the pinion 22. As the load transmission element 20 moves on it engages not only the teeth of the pinion 22 but also the teeth of the opposite cogwheel 46. Accordingly, both the pinion 22, to which the belt reel 14 is coupled, and the cogwheel 46 are forced to rotate in opposite directions. Since the teeth of the cogwheel 46 and the teeth 38 of the gearwheel 32 mesh, the gearwheel 32 is driven by the cogwheel 46 in the same direction as the pinion 22.

However, due to the different diameters, the gearwheel 32 always rotates slower than the pinion 22 (see arrows in Figure 12b). Due to the higher angular velocity of the pinion 22 the protrusion 40 moves from its initial position (see Figure 12a) relative to the gearwheel 32 towards the second peripheral edge of the recess 34. When the inclined second end 44 of the protrusion 40 reaches the second peripheral edge of the recess 34, the inclined second end 44 of the protrusion 40 acts like a ramp, and further rotation of the pinion 22 relative to the gearwheel 32 causes the pinion 22 to move away from the belt reel 14 in axial direction, as shown in Figures 13a and 13b. To further facilitate the lifting of the pinion 22, the second peripheral edge of the recess 34 may be inclined corresponding to the inclination of the second end 44 of the protrusion 40.

The belt tensioning phase ends when the protrusion 40 is completely lifted out of the recess 34. In this state the pinion 22 is decoupled from the belt reel 14, and the belt reel 14 is allowed to rotate in the unwinding direction without interference by the load transmission element 20 or the pinion 22 so that a force-limiting operation is possible (see Figures 14a and 14b).

In the embodiment shown in Figures 9-14b four protrusions 40 and four corresponding recesses 34 are provided. It is to be noted that in principle only one pair of a protrusion 40 and a recess 34 is required, but any suitable number may be chosen. Likewise, lifting of the pinion 22 is also possible with at least one recess being formed in the pinion 22 and at least one corresponding protrusion being formed on the gearwheel 32.

### List of Reference Signs

- 10: belt retractor
- 12: frame
- 14: belt reel
- 16: drive unit
- 18: tensioner tube
- 20: load transmission element
- 22: pinion
- 24: tensioner housing
- 26: retracting mechanism
- 28: ramp
- 30: flange
- 32: gearwheel
- 34: recesses
- 36: central opening
- 38: teeth of gearwheel
- 40: protrusion
- 42: first end of protrusion
- 44: second end of protrusion
- 46: cogwheel

## Claims

1. A belt retractor (10) for a vehicle safety belt system, the belt retractor (10) comprising a belt tensioner including a pyrotechnic drive unit (16) for tensioning a safety belt during a belt tensioning phase, and a load limiter for limiting the load applied by the safety belt on a vehicle occupant during a load limiting phase after the belt tensioning phase,
the belt tensioner including a frame (12), a belt reel (14), a toothed pinion (22), a drive unit (16) and an elongated load transmission element (20),
the belt reel (14) being rotatably supported in the frame (12),
the pinion (22) being coupled to the belt reel (14) and positioned such that the belt reel (14) and the pinion (22) are coaxial with adjoining axial sides,
the load transmission element (20) engaging the teeth of the pinion (22) during the belt tensioning phase,
the belt tensioner further including a decoupling mechanism for decoupling the belt reel (14) from the pinion (22) at the end of the belt tensioning phase.

2. The belt retractor (10) according to claim 1, **characterized in that** the pinion (22) is arranged coaxially with the belt reel (14), and that the decoupling mechanism includes means for urging the pinion (22) away from the belt reel (14) in axial direction.

3. The belt retractor (10) according to claim 2, **characterized in that** a pathway for the load transmission element (20) is defined, a guiding means being provided in the pathway for guiding the load transmission element (20) in a direction in which the load transmission element (20) exerts a force on the pinion (22) in axial direction.

4. The belt retractor (10) according to claim 3, **characterized in that** the guiding means is a ramp (28), preferably formed on the frame (12).

5. The belt retractor (10) according to claim 3 or 4, **characterized in that** the pinion (22) is provided with a radial flange (30) on an axial side facing away from the belt reel (14), the flange (30) radially extending beyond the teeth of the pinion (22).

6. The belt retractor (10) according to claim 2, **characterized in that** the decoupling mechanism includes a gear construction for providing an axial force on the pinion (22).

7. The belt retractor (10) according to claim 6, **characterized in that** the gear construction includes a gearwheel (32) that performs a movement relative to the pinion (22) during the belt tensioning phase, the relative movement of the gearwheel (32) resulting in a force on the pinion (22) at the end of the belt tensioning phase in order to decouple the pinion (22) from the belt reel (14).

8. The belt retractor (10) according to claim 7, **characterized in that** the gearwheel (32) is generally disc-shaped, the pinion (22) or the gearwheel (32) including at least one protrusion (40) that engages a recess (34) in the gearwheel (32) or the pinion (22), respectively, in the coupled state of the belt reel (14) and the pinion (22).

9. The belt retractor (10) according to claim 8, **characterized in that** the dimensions of the protrusion (40) and the recess (34) are selected such that the protrusion (40) can travel a certain distance during the relative movement of the gearwheel (32) before it reaches an edge of the recess (34).

10. The belt retractor (10) according to claim 8 or claim 9, **characterized in that** the protrusion (40) and/or the edge of the recess (34) are inclined in order to change the direction of the relative movement between the pinion (22) and the gearwheel (32).

11. The belt retractor (10) according to any of claims 7 to 10, **characterized in that** the gearwheel (32) is indirectly driven by the load transmission element (20).

12. The belt retractor (10) according to claim 11, **characterized in that** the teeth (38) of the gearwheel (32) mesh with the teeth of a cogwheel (46) partly arranged in a pathway of the load transmission element (20) opposite the pinion (22).

## Patentansprüche

1. Gurtaufroller (10) für ein Fahrzeugsicherheitsgurtsystem, wobei der Gurtaufroller (10) einen Gurtstraffer mit einer pyrotechnischen Antriebseinheit (16) zur Straffung eines Sicherheitsgurts während einer Gurtstraffungsphase umfasst und einen Kraftbegrenzer zur Begrenzung der Kraft, die vom Sicherheitsgurt auf einen Fahrzeuginsassen, während einer Kraftbegrenzungsphase nach einer Gurtstraffungsphase, ausgeübt wird,
wobei der Gurtstraffer einen Rahmen (12), eine Gurtspule (14), ein Ritzel (22), eine Antriebseinheit (16) und ein längliches Kraftübertragungselement (20) umfasst,
wobei die Gurtspule (14) drehbar im Rahmen (12) gelagert ist,
wobei das Ritzel (22) mit der Gurtspule (14) gekoppelt ist und so angeordnet ist, dass die Gurtspule (14) und das Ritzel (22) koaxial mit den benachbarten Axialseiten sind,
wobei das Kraftübertragungselement (20) während der Gurtstraffungsphase mit den Zähnen des Ritzels (22) in Eingriff steht,
wobei der Gurtstraffer ferner einen Entkopplungsmechanismus zur Entkopplung der Gurtspule (14) vom Ritzel (22) am Ende der Gurtstraffungsphase umfasst.

2. Gurtaufroller (10) gemäß Anspruch 1, **dadurch gekennzeichnet, dass** das Ritzel (22) koaxial mit der Gurtspule (14) angeordnet ist, und dass der Entkopplungsmechanismus über ein Mittel zum Wegdrücken des Ritzels (22) von der Gurtspule (14) in Axialrichtung verfügt.

3. Gurtaufroller (10) gemäß Anspruch 2, **dadurch gekennzeichnet, dass** ein Weg für das Kraftübertragungselement (20) definiert ist, wobei ein Führungsmittel auf dem Weg vorgesehen ist, um das Kraftübertragungselement (20) in eine Richtung zu führen in der das Kraftübertragungselement (20) eine Kraft auf das Ritzel (22) in Axialrichtung ausübt.

4. Gurtaufroller (10) gemäß Anspruch 3, **dadurch gekennzeichnet, dass** das Führungsmittel eine Rampe (28) ist, die vorzugsweise auf dem Rahmen (12) ausgebildet ist.

5. Gurtaufroller (10) gemäß Anspruch 3 oder 4, **dadurch gekennzeichnet, dass** das Ritzel (22) über einen radialen Flansch (30) an einer vom Gurtaufroller (14) abgewandten Axialseite verfügt, wobei sich der Flansch (30) radial über die Zähne des Ritzels (22) erstreckt.

6. Gurtaufroller (10) gemäß Anspruch 2, **dadurch gekennzeichnet, dass** der Entkopplungsmechanismus über eine Getriebekonstruktion zur Ausübung einer Axialkraft auf das Ritzel (22) verfügt.

7. Gurtaufroller (10) gemäß Anspruch 6, **dadurch gekennzeichnet, dass** die Getriebekonstruktion ein Getrieberad (32) enthält, dass während der Gurtstraffungsphase eine Bewegung relativ zum Ritzel (22) ausübt, wobei durch die relative Bewegung des Getrieberads (32) am Ende der Gurtstraffungsphase eine auf das Ritzel (22) wirkende Kraft zur Entkopplung des Ritzels (22) von der Gurtspule (14) erzeugt wird.

8. Gurtaufroller (10) gemäß Anspruch 7, **dadurch gekennzeichnet, dass** das Getrieberad (32) im Allgemeinen scheibenförmig ausgebildet ist, wobei das Ritzel (22) oder das Getrieberad (32) mindestens einen Vorsprung (40) enthält, der im gekoppelten Zustand der Gurtspule (14) und des Ritzels (22) jeweils im Eingriff mit einer Aussparung (34) im Getrieberad (32) oder im Ritzel (22) steht.

9. Gurtaufroller (10) gemäß Anspruch 8, **dadurch gekennzeichnet, dass** die Abmessungen des Vorsprungs (40) und der Aussparung (34) so gewählt sind, dass der Vorsprung (40) während der relativen Bewegung des Getrieberads (32) eine bestimmte Entfernung zurücklegen kann, bevor er eine Kante der Aussparung (34) erreicht.

10. Gurtaufroller (10) gemäß Anspruch 8 oder 9, **dadurch gekennzeichnet, dass** der Vorsprung (40) und/oder die Kante der Aussparung (34) geneigt ist/sind, um einen Richtungswechsel der relativen Bewegung zwischen dem Ritzel (22) und dem Getrieberad (32) zu erzielen.

11. Gurtaufroller (10) gemäß einem der Ansprüche 7 bis 10, **dadurch gekennzeichnet, dass** das Getrieberad (32) indirekt vom Kraftübertragungselement (20) angetrieben wird.

12. Gurtaufroller (10) gemäß Anspruch 11, **dadurch gekennzeichnet, dass** die Zähne (38) des Getrieberads (32) im Eingriff mit den Zähnen eines Zahnrads (46) stehen, das teilweise auf einem Weg des Kraftübertragungselements (20) gegenüber dem Ritzel (22) angeordnet ist.

## Revendications

1. Un rétracteur de ceinture (10) pour un système de ceinture de sécurité de véhicule, le rétracteur de ceinture (10) comprenant un tendeur de ceinture incluant une unité d'entraînement pyrotechnique (16) pour tendre une ceinture de sécurité pendant une phase de tension de la ceinture, et un limiteur de charge pour limiter la charge appliquée par la ceinture de sécurité sur un occupant du véhicule pendant une phase de limitation de charge après la phase de tension de la courroie,
le tendeur de ceinture comprenant un châssis (12), une bobine de ceinture (14), un pignon denté (22), une unité d'entraînement (16) et un élément de transmission de charge (20) allongé,
la bobine de ceinture (14) étant guidée en rotation dans le châssis (12),
le pignon (22) étant couplé à la bobine de ceinture (14) et positionné de telle sorte que la bobine de ceinture (14) et le pignon (22) sont coaxiaux avec les côtés axiaux adjacents,
l'élément de transmission de la charge (20) engageant les dents du pignon (22) pendant la phase de tension de la ceinture,
le tendeur de ceinture comprenant de plus un mécanisme de découplage pour découpler la bobine de ceinture (14) du pignon (22) à la fin de la phase de tension de la ceinture.

2. Un rétracteur de ceinture (10) selon la revendication 1, **caractérisé en ce que** le pignon (22) est disposé coaxialement avec la bobine de ceinture (14), et que le mécanisme de découplage comprend des moyens pour écarter le pignon (22) loin de la bobine de ceinture (14) dans une direction axiale.

3. Un rétracteur de ceinture (10) selon la revendication 2, caractérisé en qu'un chemin pour l'élément de transmission de la charge (20) est défini, un moyen de guidage étant fourni dans le chemin pour guider l'élément de transmission de charge (20) dans une direction dans laquelle la transmission de la charge (20) exerce une force sur le pignon (22) dans la direction axiale.

4. Un rétracteur de la ceinture (10) selon la revendication 3, **caractérisé en ce que** les moyens de guidage est une rampe (28), de préférence formée sur le châssis (12).

5. Un rétracteur de ceinture (10) selon la revendication 3 ou 4, **caractérisé en ce que** le pignon (22) est fourni avec un flasque radial (30) sur un côté axial face à la bobine de ceinture (14), le flasque (30) s'étendant radialement au-delà des dents du pignon (22).

6. Un rétracteur de ceinture (10) selon la revendication 2, **caractérisé en ce que** le mécanisme de découplage comprend un engrenage pour fournir une force axiale sur le pignon (22).

7. Un rétracteur de ceinture (10) selon la revendication 6, **caractérisé en ce que** l'engrenage comprend une roue d'engrenage (32) qui effectue un mouvement par rapport au pignon (22) au cours de la phase de tension de la ceinture, le mouvement relatif de la roue d'engrenage (32) résultant en une force sur le pignon (22) à la fin de la phase de tension de la ceinture afin de découpler le pignon (22) de la bobine de ceinture (14).

8. Un rétracteur de ceinture (10) selon la revendication 7, **caractérisé en ce que** la roue d'engrenage (32) est généralement en forme de disque, le pignon (22) ou la roue d'engrenage (32) y compris au moins une saillie (40) qui engage une cavité (34) dans la roue d'engrenage (32) ou le pignon (22), respectivement, dans l'état couplé de la bobine de ceinture (14) et du pignon (22).

9. Un rétracteur de ceinture (10) selon la revendication 8, **caractérisé en ce que** les dimensions de la saillie (40) et de la cavité (34) sont choisies de telle sorte que la saillie (40) puisse parcourir une certaine distance pendant le mouvement relatif de la roue d'engrenage (32) avant qu'elle n'atteigne un bord de la cavité (34).

10. Un rétracteur de ceinture (10) selon la revendication 8 ou la revendication 9, **caractérisé en ce que** la saillie (40) et/ou le bord de la cavité (34) sont inclinés afin de changer la direction du mouvement relatif entre le pignon (22) et la roue d'engrenage (32).

11. Le rétracteur de ceinture (10) selon l'une ou l'autre des revendications 7 à 10, **caractérisé en ce que** la roue d'engrenage (32) est indirectement entraînée par l'élément de transmission de charge (20).

12. Le rétracteur de ceinture (10) selon la revendication 11, **caractérisé en ce que** les dents (38) de la roue d'engrenage (32) s'engage avec les dents d'une roue dentée (46) partiellement disposées dans un chemin de l'élément de transmission de charge (20) en face du pignon (22).
